**Europäisches Patentamt**

**European Patent Office**

**Office européen des brevets**

(19)

(11) Veröffentlichungsnummer: **0 103 248**
**B1**

(12) # EUROPÄISCHE PATENTSCHRIFT

(45) Veröffentlichungstag der Patentschrift:
**31.05.89**

(21) Anmeldenummer: **83106724.2**

(22) Anmeldetag: **05.09.83**

(51) Int. Cl.⁴: **G 11 B 20/10**

(54) **Pulscodemodulationssystem.**

(30) Priorität: **14.09.82 DE 3233956**

(43) Veröffentlichungstag der Anmeldung:
**21.03.84 Patentblatt 84/12**

(45) Bekanntmachung des Hinweises auf die Patenterteilung:
**31.05.89 Patentblatt 89/22**

(84) Benannte Vertragsstaaten:
**DE FR GB**

(56) Entgegenhaltungen:
**DE-A-2 426 769**
**DE-A-2 757 164**
**DE-A-3 113 397**

(73) Patentinhaber: **ROBERT BOSCH GMBH, Robert-Bosch- Strasse 7 Postfach 429, D-6100 Darmstadt (DE)**

(72) Erfinder: **Heitmann, Jürgen, Dipl.- Ing., Ernst-Pasque- Strasse 38, D-6146 Alsbach- Hähnlein 1 (DE)**

(74) Vertreter: **Gornott, Dietmar, Dipl.- Ing., c/o Robert-Bosch GmbH Postfach 429 Robert- Bosch-Strasse 7, D-6100 Darmstadt (DE)**

## Beschreibung

Die Erfindung geht aus von einem System nach der Gattung des Hauptanspruchs. Bei der magnetischen Aufzeichnung, aber auch bei der Übertragung digital codierter elektrischer Analog-Signale, können durch Störsignale - beispielsweise Rauschen - Teile der Signale verfälscht werden. Als Maß für eine solche Verfälschung wird die sogenannte Bitfehlerrate angegeben, welche besagt, wieviele gestörte bzw. verfälschte Bits auf ein richtig wiedergegebenes entfallen. In der Praxis vorkommende Werte für die Bitfehlerrate liegen im Bereich von $10^{-4}$ bis $10^{-7}$. Während die Fehlerrate selbst von Eigenschaften des Aufzeichnungs- oder Übertragungskanals abhängig ist, sind die Auswirkungen von Bitfehlern auf das wiederzugebende Signal auch von der Art des Codes abhängig. Es sind daher Codes erforderlich, bei welchen Bitfehler eine möglichst geringe Auswirkung auf die rückgewandelten analogen Signale haben. Hierbei sind auch Auswirkungen im Sinne der Wahrnehmbarkeit der Fehler durch Auge oder Ohr eines Betrachters bzw. Hörers gemeint. So haben beispielsweise Versuche und theoretische Betrachtungen gleichlautend gezeigt, daß für eine bestimmte Verschlechterung des Bildeindrucks eines Fernsehbildes wesentlich mehr Fehler mit kleinerer Amplitude zugelassen werden können als solche mit großer Amplitude. Es hat sich gezeigt, daß die Fehlerrate jeweils um den Faktor 10 erhöht werden könn, um bei binär codierten Signalen bei einer Störung in einem weniger wichtigen Bit die gleiche Störempfindung wie bei dem um eine Binärstelle wichtigeren Bit hervorzurufen.

Aufgabe der vorliegenden Erfindung ist es, ein Pulscodemodulationssystem vorzuschlagen, bei welchem sich Bitfehler möglichst wenig im wiedergegebenen analogen Signal bemerkbar machen.

## Vorteile der Erfindung

Das erfindungsgemäße System mit den kennzeichnenden Merkmalen des Hauptanspruchs hat den Vorteil, daß bei gegebener Fehlerrate des digitalen Signals das analoge Signal weniger gestört ist. Durch die in den Unteransprüchen aufgeführten Maßnahmen sind vorteilhafte Weiterbildungen und Verbesserungen des im Hauptanspruch angegebenen Systems möglich. Das erfindungsgemäße System kann besonders vorteilhaft zur Aufzeichnung oder Übertragung von Videosignalen aber auch anderen Analogsignalen - wie beispielsweise Audiosignalen - verwendet werden.

## Zeichnung

Ausführungsbeispiele der Erfindung sind in der Zeichnung anhand mehrerer Figuren dargestellt und in der nachfolgenden Beschreibung näher erläutert. Es zeigt:

Fig. 1    ein Blockschaltbild einer Einrichtung zur Codierung und zur Decodierung nach dem erfindungsgemäßen System,

Fig. 2    tabellarisch ein einfaches Beispiel für einen im erfindungsgemäßen System anwendbaren Code und

Fig. 3    ebenfalls tabellarisch ein weiteres Beispiel, nämlich auszugsweise einen Code für ein 8 Bit-Signal und

Fig. 4    eine Darstellung der Häufigkeit der Amplitudenfehler als Funktion der Größe der Amplitudenfehler.

## Beschreibung der Ausführungsbeispiele

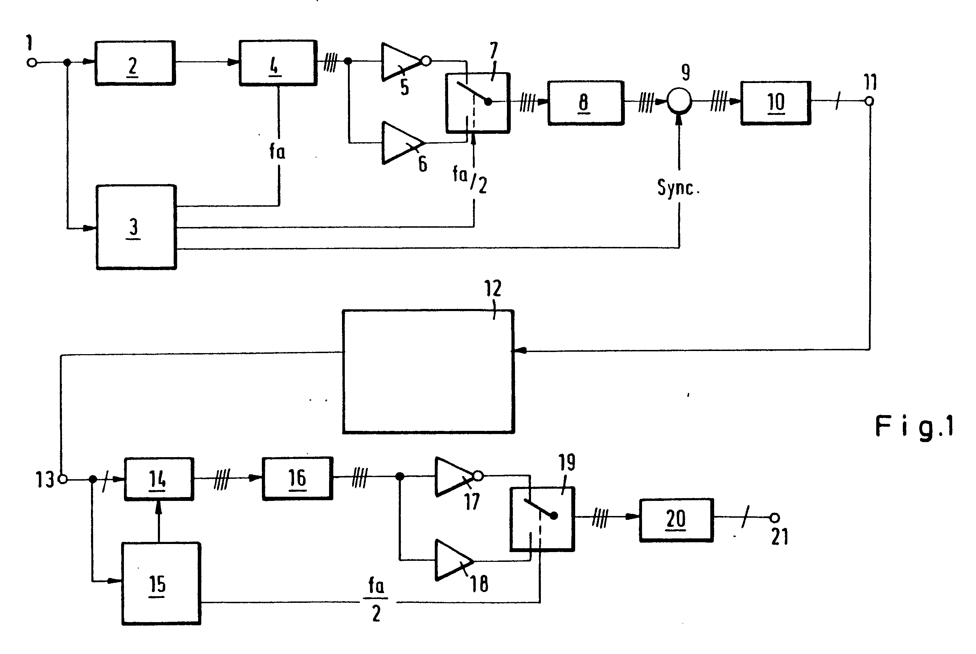

Figur 1 stellt ein erfindungsgemäßes Ausführungsbeispiel dar. Bei 1 wird das aufzuzeichnende Videosignal zugeführt. Es gelangt einerseits über einen Tiefpaß 2 zu einem Analog/Digital-Wandler 4 und andererseits zu einem Takt- und Synchrongenerator. In diesem wird vom Videosignal das Synchronisiersignal abgetrennt, aus welchem der Abtasttakt für den Analog/Digital-Wandler 4 und weitere später zu erläuternde Taktsignale abgeleitet werden. Das digitale Ausgangssignal eines Analog/Digital-Wandlers besteht üblicherweise aus einem mehrstelligen Binärwort, welches beispielsweise beim niedrigsten Videopegel mit 0000 anfängt und beim höchsten Videopegel den Wert 1111 aufweist. Zur Erzielung einer genügend hohen Auflösung der Pegelstufen des Videosignals wird meistens ein 8-stelliges Digitalwort übertragen. Um jeden zweiten Abtastwert zu invertieren, wird vom Takt- und Synchrongenerator 3 ein Signal mit halber Abtastfrequenz einem Umschalter 7 zugeführt. Der Umschalter 7 leitet jeweils während einer Abtastperiode das über den Inverter 5 geleitete Digitalsignal und das über einen Buffer geleitete Digitalsignal an einem Codewandler 8 weiter. Diese Invertierung trägt bei Videosignalen zu einer Verringerung des Gleichspannungsanteils der digitalen Signale bei, ist aber für die Lösung der erfindungsgemäßen Aufgabe nicht unbedingt erforderlich.

Im Codewandler 8 wird aus dem binärcodierten Ausgangssignal des Analog/Digital-Wandlers 4 ein Digitalsignal mit einem erfindungsgemäßen Code.

In einer realisierten Ausführungsform der Schaltungsanordnung nach Fig. 1 wurde selbstverständlich der Umschalter 7 mit den in der Digitaltechnik üblichen Verknüpfungsschaltungen realisiert. Der Codewandler kann aus einem programmierbaren

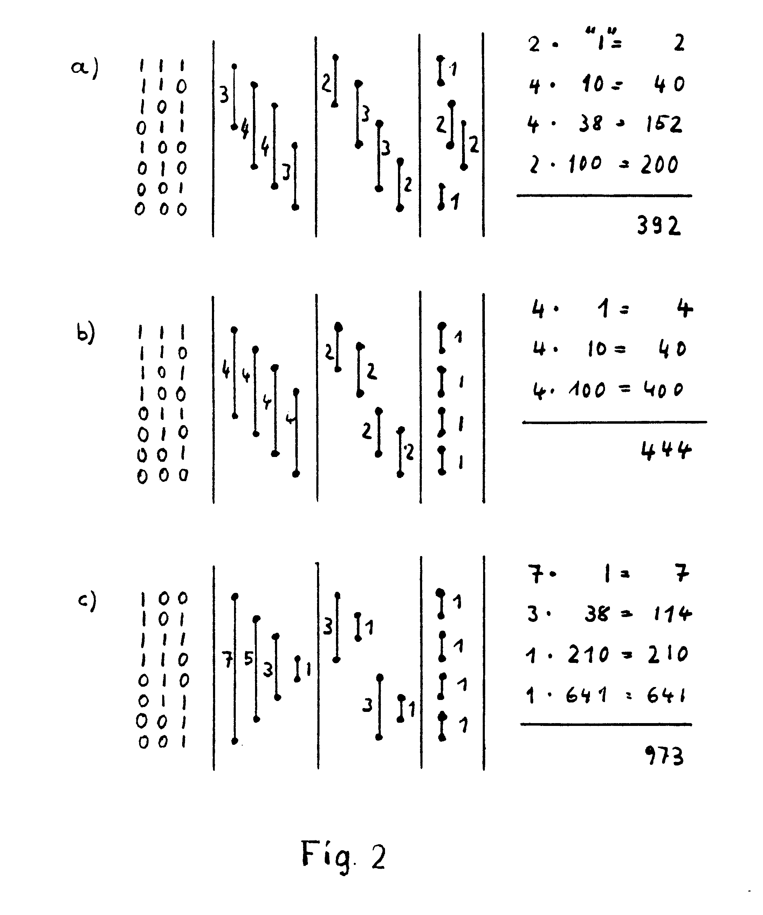

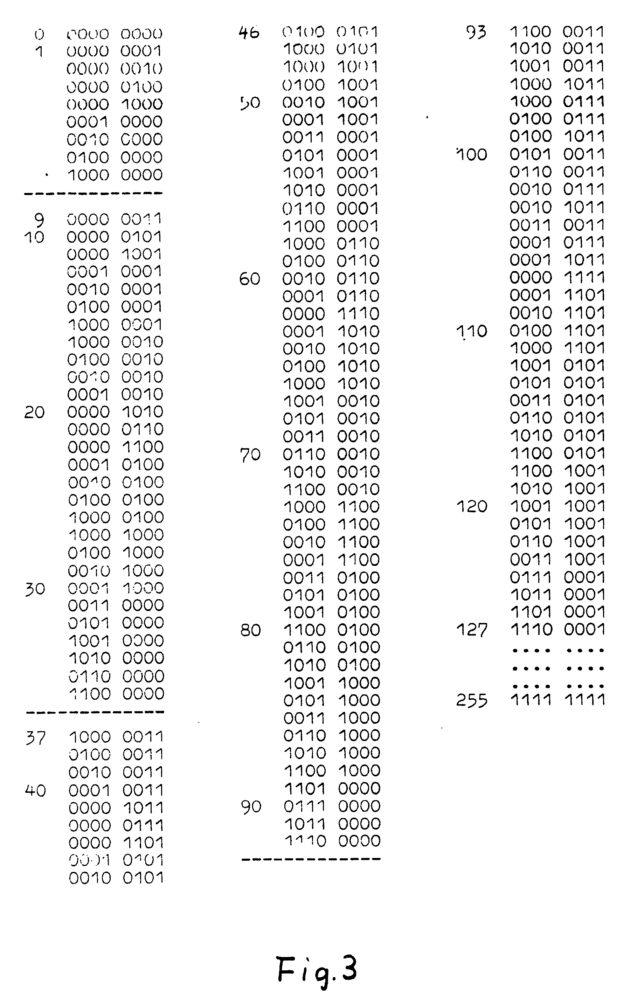

Auslesespeicher (PROM) bestehen. Ein Beispiel eines erfindungsgemäßen 8-Bit-Codes wird anhand einer Code-Tabelle in Fig. 3 dargestellt. Das Wesen der Erfindung wird jedoch zunächst anhand eines in Fig. 2 dargestellten 4-Bit-Codes erläutert.

In der Schaltung 9 wird dem Digitalsignal ein digitales Synchronsignal zugeführt, welches im Takt- und Synchrongenerator 3 aus dem Synchronsignal des Videosignals abgeleitet wurde. Der Parallelseriewandler 10 wandelt dann schließlich das Digitalsignal in ein serielles Digitalsignal um, welches der schematisch dargestellten Aufzeichnungseinrichtung oder einem Übertragungskanal zugeführt wird.

Anhand der Figuren 2 und 3 werden nun Beispiele für erfindungsgemäße Codes erläutert. Da derartige Codes an die Eigenschaften des Übertragungs- bzw. Aufzeichnungskanals angepaßt sind, werden diese Codes auch als Kanalcodes bezeichnet. Die im vorliegenden Fall wesentliche Kanaleigenschaft ist die Annahme, daß eine Störung bei allen Bits gleich wahrscheinlich, die Störung mehrerer Bits eines Wortes jedoch recht unwahrscheinlich ist. Bevor jedoch auf die Figuren im einzelnen eingegangen wird, eine kurze Erläuterung des Binärcodes im Zusammenhang mit Fehlern:

Bei der Wahl eines Kanalcodes ist auch seine Fehlerempfindlichkeit zu beachten. Beim 8-Bit-Binärcode werden statistisch gesehen auf jedes Bit, ob MSB oder LSB, 12,5 % aller Fehler entfallen. Zur Übertragung oder Aufzeichnung über gestörte Kanäle können die Daten jedoch in einen Code umgewandelt werden, der eine geringere Fehlerempfindlichkeit aufweist. Dabei ist zu beachten, daß Fehler im MSB wesentlich stärker stören als in den weniger wichtigen Bitstellen. Das heißt, es ist vorteilhaft, einen Kanalcode zu verwenden, bei dem keine Gleichverteilung der Fehler auf alle Bitstellen vorliegt, sondern bei dem die Fehlerhäufigkeit zu den weniger wichtigen Bits des Binärcodes hin verschoben ist; das heißt, im Kanalcode dürfen Bitfehler auftreten, die im Binärcode mehrere Bitfehler zur Folge haben, wenn im Binärcode geringwertige Bits betroffen sind.

Anhand von sehr einfachen Beispielen soll nun das Wesen der Erfindung erläutert werden. Dazu sind in Fig. 2 drei verschiedene Codes mit jeweils drei Bit dargestellt. Und zwar ist unter b der sogenannte Binärcode gezeigt, welcher durch Abzählen der Amplitudenstufe im Binärzahlensystem entsteht. Unter a ist ein erfindungsgemäßer Code dargestellt, während mit c eine Tabelle des Gray-Codes bezeichnet ist. Jeweils in der linken Spalte sind die Amplitudenstufen bezeichnet, rechts davon folgt die Codetabelle. In den weiteren rechts anschließenden Spalten sind Fehler dargestellt, welche durch die Verfälschung jeweils eines Bits entstehen. So ist beispielsweise beim Binärcode eine Verfälschung des analogen Signals um vier Amplitudenstufen die Folge davon, daß in der ersten Binärstelle eine 1 anstelle einer 0 oder eine 0 anstelle einer 1 übertragen wird. Änderungen in der zweiten Binärstelle haben jeweils einen Amplitudensprung von 2 zur Folge, während Änderungen der dritten Stelle nur einen Amplitudensprung um 1 nach sich ziehen. Gemäß den oben erwähnten Versuchen hat nun eine Verdoppelung des Amplitudenfehlers eine Verzehnfachung der Störerwirkung zur Folge. Bei einer Annahme, daß alle möglichen Bitfehler gleich häufig auftreten, ergibt sich folgende Rechnung für die Störwirkung für den unter b) dargestellten Binärcode:

Es sind vier Bitfehler möglich mit jeweils einem Amplitudensprung, es sind weitere vier Bitfehler möglich mit der Folge eines Amplitudensprunges um 2 Stufen; daraus ergibt sich eine Störwirkung von 4 x 10 = 40. Schließlich sind 4 Bitfehler möglich mit einer Wirkung von jeweils vier Amplitudenstufen, welche jeweils mit 100 zu bewerten sind, so daß sich ein Maß für die Störwirkung von 444 ergibt. Bei dem in Fig. 2a dargestellten Ausführungsbeispiel für einen erfindungsgemäßen Code ergeben sich nur zwei Sprünge um jeweils vier Amplitudenstufen. Dafür sind vier Fehler von jeweils drei Amplitudenstufen möglich, welche mit 38 zu bewerten sind. Insgesamt ergibt sich eine Störwirkung von 392, welche deutlich niedriger als bei dem Binärcode liegt. Zum Vergleich ist in Zeile c der Figur 2 noch ein sogenannter Gray-Code angegeben. Bei diesem Code ist bei einer Verfälschung der ersten Stelle sogar eine Verfälschung der Amplitude um 7 Stufen gegeben, so daß, wie die nebenstehende Rechnung zeigt, die gesamte Störwirkung des Gray-Codes wesentlich größer ist.

Die Wirkung des erfindungsgemäßen Systems auf die Störwirkung ist zwar bei dem 3-Bit-Signal deutlich, es ergeben sich jedoch größere Verbesserungen bei Codes mit mehr Stellen, beispielsweise bei einem 8-Bit-Code, wie er in der Fernsehtechnik häufig angewandt wird.

Bei der in Fig. 3 dargestellten Codetabelle sind in der linken Spalte die Amplitudenstufen der Reihenfolge nach im Dezimalsystem angegeben. Die rechte Spalte zeigt die den Amplitudenstufen zugeordneten zur Übertragung bzw. Aufzeichnung vorgesehenen digitalen Signale. Die kleinste Amplitudenstufe, nämlich die Stufe 0, wird durch acht Nullen dargestellt. Bis zur Amplitudenstufe 8 weisen die digitalen Signale jeweils eine 1 an verschiedenen Stellen auf. Bis zur Amplitudenstufe 36 befinden sich zwei Einsen in einem achtstelligen digitalen Wort. Mit noch höheren Amplitudenstufen steigt dann die Anzahl der Einsen an. Zur Vereinfachung wurde die Tabelle lediglich bis zur Amplitudenstufe 127 geschrieben, da für noch höhere Amplitudenstufen die Verhältnisse symmetrisch sind, bis schließlich bei der Amplitudenstufe 255 ein digitales Signal mit acht Einsen vorhanden ist

Eine Verfälschung des Codewörtes für die Amplitudenstufe 0 um 1 Bit ergibt also eine Fehleramplitude von höchstens 8 Amplitudenstufen. Allgemeiner ausgedrückt: ein

Bitfehler macht sich also höchstens derart bemerkbar, daß anstelle der richtigen Amplitudenstufe eine aus einer benachbarten Gruppe übertragen bzw. wiedergegeben wird. Hierbei sind eine Gruppe jeweils diejenigen aufeinanderfolgenden Amplitudenstufen, welche durch ein Digitalwort mit der gleichen Anzahl von Nullen oder Einsen repräsentiert werden. Die Gruppen sind verschieden groß; so umfaßt die Gruppe mit einer Eins und sieben Nullen acht Amplitudenstufen, während die Gruppe mit vier Einsen und vier Nullen 70 Amplitudenstufen umfaßt, wobei jedoch nur 35 dargestellt sind. Bereits nach dem, was bisher erläutert wurde, ist eine Reduzierung der Fehlerempfindlichkeit möglich. Es sind jedoch relativ große Amplitudenverfälschungen aufgrund eines Bitfehlers möglich, kommen jedoch seltener vor, als beim Binärcode. So ist es beispielsweise ohne weitere Maßnahmen durchaus möglich, daß ein am oberen Ende der Gruppe mit vier Einsen und vier Nullen liegendes Codewort durch einen Bitfehler dahingehend verfälscht wird, daß es dann einem Codewort am unteren Ende der Gruppe mit drei Einsen entspricht. Der sich ergebende Amplitudenfehler wäre 123 Amplitudenstufen. Es wurden deshalb die Codeworte innerhalb der Gruppen derart geordnet, daß ein Codewort, welches an dem einen Ende einer Gruppe liegt, durch Verfälschung eines Bits möglichst ein Codewort an dem entsprechenden Ende der benachbarten Gruppe ergibt. Das erste bzw. unterste Codewort mit drei Einsen für die Amplitudenstufe 37 kann durch Verfälschung einer Null in eine Eins zu den Codeworten für die Amplitudenstufen 93 bis 97 werden - also zu den ersten bzw. unteren Amplitudenstufen der Gruppe mit vier Einsen.

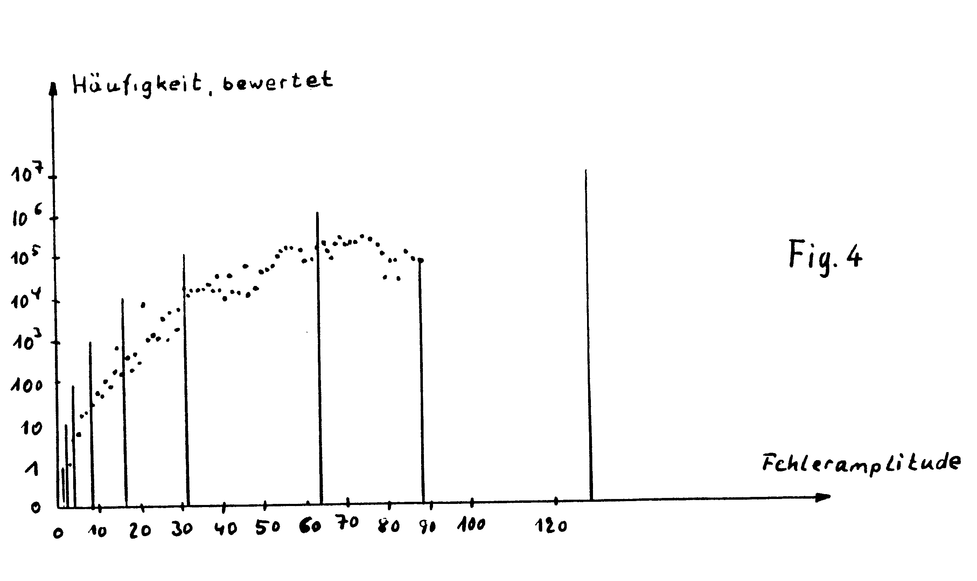

Der nach diesen Gesichtspunkten aufgebaute Code nach Fig. 3 führt zu einer Häufigkeitsverteilung der Fehleramplituden wie sie in Fig. 4 dargestellt ist; und zwar ist in Fig. 4 sowohl für den Binärcode als auch für den Code nach Fig. 3 auf der Abszisse die Fehleramplitude und auf der Koordinate die Häufigkeit des Auftretens von Fehlern entsprechend der Amplitude. Die Häufigkeit wurde entsprechend der eingangs genannten Abhängigkeit, daß nämlich ein Fehler halber Amplitude, 10mal so häufig auftreten darf, um gleich störend in Erscheinung zu treten, bewertet.

Beim Binärcode können durch Verfälschung eines Bits des 8-Bit-Wortes nur die Fehler 1, 2, 4, 8, 16, 32, 64 und 128 auftreten. Diese sind in Fig. 4 durch senkrechte Linien dargestellt. Wegen der großen Unterschiede in der Häufigkeit wurde hierfür ein logarithmischer Maßstab gewählt, was jedoch nicht darüber hinwegtäuschen sollte, daß beispielsweise ein Fehler von 64 Amplitudenstufen 10 mal weniger stört als ein Fehler von 128 Amplitudenstufen. Als Punkte sind nun die einzelnen Häufigkeiten der Fehler bei einem Code nach Fig. 3 in das Diagramm eingetragen. Der größte auftretende Fehler beträgt 88 Amplitudenstufen. Das mit der Störwirkung bewertete Integral aller Fehleramplituden ist kleiner als beim Binärcode. Eine Verbesserung des Störabstandes um 6 dB konnte nachgewiesen werden.

Das erfindungsgemäße System ist nicht auf die beschriebenen Ausführungsbeispiele beschränkt. Es kann für kürzere oder längere Bitworte angewendet werden. Bei dem im Zusammenhang mit den Figuren 1 und 3 beschriebenen Ausführungsbeispiel wurde eine ansteigende Anzahl von Einsen angenommen. Dieses stellt eine Kombination mit dem Gegenstand der DE-A-3 113 397 dar, bei welchem zur günstigeren Spektralverteilung des digitalen Signals bei der Aufzeichnung von Videosignalen jeder zweite Bildpunkt invertiert wird und außerdem die Anzahl der Einsen etwa proportional zur Videoamplitude ist. Die vorliegende Erfindung kann jedoch auch ohne die Merkmale nach der DE-A-3 113 397 angewendet werden. Es kann also die Invertierung innerhalb der Schaltungsanordnung nach Fig. 1 entfallen. Ebenso ist es nicht erforderlich, von einem Datenwort 00000000 auszugehen. Für die Amplitudenstufe 0 beispielsweise kann jedes beliebige Datenwort verwendet werden; es ist lediglich erforderlich, daß sich die Änderungen gegenüber diesem Datenwort so wie in dieser Anmeldung beschrieben verhalten. Die Beziehung zwischen den Codeworten für die Amplitudenstufen 1 bis 8 zu dem Codewort für die Amplitudenstufe 0 wäre also in allgemeinerer Form wie folgt auszudrücken: Ausgehend von dem Codewort für die Amplitudenstufe 0 werden die Codeworte für die Amplitudenstufe 1 bis 8 dadurch festgelegt, daß jeweils eine andere Bitstelle geändert wird. Falls diese Bitstelle bei dem Codewort für die Amplitudenstufe 0 eine 0 ist, in den Wert 1 bzw. falls bei dem Codewort für die Amplitudenstufe 0 eine 1 vorliegt, in den Wert 0.

Da bei vorangegangenen Betrachtungen kein Unterschied zwischen einem Bitfehler, welcher eine Verfälschung einer Eins in eine Null zur Folge hat, und einem Bitfehler im entgegengesetzten Sinn gemacht wird, kann bei der Tabelle nach Fig. 3 eine gesamte Spalte invertiert werden, ohne daß der damit entstehende andere Code gegenüber dem in Fig. 3 dargestellten eine unterschiedliche Störwirkung aufweist.

Das wiedergegebene bzw. übertragene serielle Digitalsignal wird bei 13 (Fig. 1) einem Serie/Parallel-Wandler 14 und einem Takt- und Synchron-Regenerator 15 zugeführt. Das Ausgangssignal wird zu einem Codewandler 16 geleitet, dessen Funktion entgegengesetzt zur Funktion des Codewandlers 8 ist, so daß an dessen Ausgang ein wie eingangs beschriebenes binär-codiertes Signal ansteht. Dieses wird wiederum mit Hilfe der Schaltungen 17, 18 und 19 von Abtastwert zu Abtastwert invertiert, womit die entsprechende Invertierung mit Hilfe der Schaltungen 5, 6 und 7 aufgehoben wird. Hierzu wird dem Schalter 19 vom Takt- und Synchron-Regenerator 15 erzeugtes Signal mit halber Abtastfrequenz $f_a/2$ zugeführt.

Mit Hilfe eines Digital/Analog-Wandlers 20 wird schließlich das analoge Videosignal erzeugt, das am Ausgang 21 zur weiteren Verwendung zur Verfügung steht.

Die schematisch als Blöcke dargestellten einzelnen Schaltungen entsprechen grundsätzlich bekannten Schaltungen und brauchen im Rahmen der vorliegenden Erfindung nicht näher erläutert zu werden.

**Patentansprüche**

1. Pulscodemodulationssystem, bei welchem von einem analogen Videosignal ein Digitalsignal mit Codeworten, welche Amplitudenwerten des analogen Videosignals zugeordnet sind, erzeugt wird, und bei welchem das Digitalsignal über einen Aufzeichnungs- oder Übertragungskanal geleitet und anschließend in ein analoges Videosignal zurückgewandelt wird, dadurch gekennzeichnet, daß die Zuordnung der verschiedenen Worte des Digitalsignals zu den verschiedenen Amplitudenwerten derart erfolgt, daß ausgehend von einer der Grenzen des für das analoge Videosignal vorgesehenen Amplitudenbereiches Codeworte gebildet sind, bei welchen gegenüber dem Codewort für die eine Grenze des Amplitudenbereiches n Bits geändert sind, wobei für die an die eine Grenze anschließenden Amplitudenstufen alle Codeworte mit n = 1 eine erste Gruppe bilden, an die sich eine zweite Gruppe von Codeworten mit n = 2 und weitere Gruppen mit jeweils um eins höherem n aufsteigend bis zu einer Gruppe von n = (Anzahl der Bits eines Codewortes minus 1), und ein Codewort, bei welchem alle Bits geändert sind, entsprechend der anderen Grenze des Amplitudenbereichs, anschließen.

2. Pulscodemodulationssystem nach Anspruch 1, dadurch gekennzeichnet, daß das Codewort für eine Grenze des Amplitudenbereichs aus Nullen und das Codewort für die andere Grenze aus Einsen besteht, und daß dazwischen Gruppen aus Codeworten mit gleicher Anzahl von Einsen derart angeordnet sind, daß von Gruppe zu Gruppe die Anzahl der Einsen jeweils um 1 steigt.

3. Pulscodemodulationssystem nach Anspruch 1, dadurch gekennzeichnet, daß die Reihenfolge der Codeworte einer Gruppe mit n = m innerhalb der Gruppe derart festgelegt ist, daß die Summe aller möglichen durch Einzelbitfehler erzeugten Amplitudenfehler, die ein Codewort der Gruppe n = m in Codeworte der Gruppe n = m - 1 oder n = m + 1 verfälschen, ein Minimum ergibt.

4. Pulscodemodulationssystem nach Anspruch 3, dadurch gekennzeichnet, daß bei der Summierung aller möglichen durch Einzelbitfehler erzeugten Amplitudenfehler die Bitfehler nicht entsprechend der A/D-Wandlung mit Zweierpotenzen, sondern entsprechend ihrer Störwirkung mit Zehner-potenzen bewertet werden.

**Claims**

1. Pulse code modulation system, in which from an analog video signal is produced a digital signal with code words with which are associated amplitude values of the analog video signal and in which the digital signal is passed across a recording or transmission channel and is then converted back into an analog video signal, characterized in that the association of the different words of the digital signal to the different amplitude values takes place in such a way that starting from the limits of the amplitude range provided for the analog video signal, code words are formed in which n bits are changed for one limit of the amplitude range compared with the code word and for the amplitude stages following on one limit all code words with n = 1 form a first group, to which is connected a second group of code words with n = 2 and further groups with in each case one more n rising up to a group of n = (number of bits of a code word minus 1), and a code word in which all bits are changed, corresponding to the other limit of the amplitude range.

2. Pulse code modulation system according to claim 1, characterized in that the code word for one limit of the amplitude range comprises zeros and the code word for the other limit comprises ones and between the same are arranged groups of code words with identical numbers of ones in such a way that the number of ones in each case rises by 1 between the groups.

3. Pulse code modulation system according to claim 1, characterized in that the sequence of the code words of a group with n = m within the group is fixed in such a way that the sum of all the possible amplitude errors produced by single bit errors falsifying a code word of group n = m into code words of the group n = m - 1 or n = m + 1 gives a minimum.

4. Pulse code modulation system according to claim 3, characterized in that in the case of the summation of all the possible amplitude errors produced by the single bit errors, the bit errors are weighted with powers of ten in accordance with their interference action and not with powers of two in accordance with the A/D conversion.

**Revendications**

1. Système de modulation par impulsions codées, selon lequel à partir d'un signal video analogique, on génère un signal numérique avec des mots de code qui sont associés à la valeur de l'amplitude du signal vidéo analogique, et selon lequel le signal numérique est envoyé par un canal d'enregistrement ou de transmission pour être transformé en retour en un signal vidéo analogique, système caractérisé en ce que l'association des différents mots du signal numérique aux différentes valeurs de l'amplitude se fait de manière qu'en partant de l'une des limites de la plage d'amplitude prévue pour le signal vidéo analogique, on forme des mots de code pour lesquels on a changé n bits pour l'une des limites de la plage d'amplitude, par rapport aux mots de code, et pour les niveaux d'amplitude adjacents à cette limite, tous les mots de code avec n = 1 forment un premier groupe suivi par un second groupe des mots de code ayant n = 2 et d'autres groupes avec chaque fois une valeur de n augmentée d'une unité de manière croissante jusqu'à un groupe de n = (nombre des bits d'un mot de code diminué de 1) et un mot de code pour lequel tous les bits ont été modifiés en fonction de la limite de la plage d'amplitude.

2. Système de modulation par impulsions codées selon la revendication 1, caractérisé en ce que le mot de code pour une limite de la plage d'amplitude se compose de zéros et le mode de code pour l'autre limite de cette plage se compose de chiffres uns, et en ce qu'entre les groupes de mots de code, on a un même nombre de chiffres uns de façon que d'un groupe à l'autre, le nombre de chiffres uns augmente chaque fois d'une unité.

3. Système de modulation par impulsions codées selon la revendication 1, caractérisé en ce que la suite des mots de code d'un groupe avec n = m est fixée à l'intérieur du groupe de manière que la somme de toutes les erreurs d'amplitude possibles engendrées par une erreur d'un seul bit changeant par erreur un mot de code du groupe n = m en un mot de code du groupe n = m - 1 ou n = m + 1 donne un minimum.

4. Système de modulation par impulsions codées selon la revendication 3, caractérisé en ce qu'à l'addition de toutes les erreurs d'amplitude possibles résultant de l'erreur d'un seul bit, on exploite les erreurs de bit non selon la conversion analogique/numérique de puissance deux mais selon leur effet parasite suivant des puissances de dix.

Fig.1

a)

```
1 1 1
1 1 0
1 0 1
0 1 1
0 1 0
0 0 1
0 0 0
```

2 · "1" =    2
4 ·  10 =   40
4 ·  38 =  152
2 · 100 =  200
_____
           392

b)

```
1 1 1
1 1 0
1 0 1
1 0 0
0 1 0
0 0 1
0 0 0
```

4 ·   1 =    4
4 ·  10 =   40
4 · 100 =  400
_____
           444

c)

```
1 0 0
1 0 1
1 1 1
1 1 0
0 1 0
0 1 1
0 0 1
0 0 1
```

7 ·   1 =    7
3 ·  38 =  114
1 · 210 =  210
1 · 641 =  641
_____
           973

Fig. 2

| | | | | | | | |
|---|---|---|---|---|---|---|---|
| 0 | 0000 0000 | 46 | 0100 0101 | 93 | 1100 0011 | | |
| 1 | 0000 0001 | | 1000 0101 | | 1010 0011 | | |
| | 0000 0010 | | 1000 1001 | | 1001 0011 | | |
| | 0000 0100 | | 0100 1001 | | 1000 1011 | | |
| | 0000 1000 | 50 | 0010 1001 | | 1000 0111 | | |
| | 0001 0000 | | 0001 1001 | | 0100 0111 | | |
| | 0010 0000 | | 0011 0001 | | 0100 1011 | | |
| | 0100 0000 | | 0101 0001 | 100 | 0101 0011 | | |
| · | 1000 0000 | | 1001 0001 | | 0110 0011 | | |
| | | | 1010 0001 | | 0010 0111 | | |
| 9 | 0000 0011 | | 0110 0001 | | 0010 1011 | | |
| 10 | 0000 0101 | | 1100 0001 | | 0011 0011 | | |
| | 0000 1001 | | 1000 0110 | | 0001 0111 | | |
| | 0001 0001 | | 0100 0110 | | 0001 1011 | | |
| | 0010 0001 | 60 | 0010 0110 | | 0000 1111 | | |
| | 0100 0001 | | 0001 0110 | | 0001 1101 | | |
| | 1000 0001 | | 0000 1110 | | 0010 1101 | | |
| | 1000 0010 | | 0001 1010 | 110 | 0100 1101 | | |
| | 0100 0010 | | 0010 1010 | | 1000 1101 | | |
| | 0010 0010 | | 0100 1010 | | 1001 0101 | | |
| | 0001 0010 | | 1000 1010 | | 0101 0101 | | |
| 20 | 0000 1010 | | 1001 0010 | | 0011 0101 | | |
| | 0000 0110 | | 0101 0010 | | 0110 0101 | | |
| | 0000 1100 | | 0011 0010 | | 1010 0101 | | |
| | 0001 0100 | 70 | 0110 0010 | | 1100 0101 | | |
| | 0010 0100 | | 1010 0010 | | 1100 1001 | | |
| | 0100 0100 | | 1100 0010 | | 1010 1001 | | |
| | 1000 0100 | | 1000 1100 | 120 | 1001 1001 | | |
| | 1000 1000 | | 0100 1100 | | 0101 1001 | | |
| | 0100 1000 | | 0010 1100 | | 0110 1001 | | |
| | 0010 1000 | | 0001 1100 | | 0011 1001 | | |
| 30 | 0001 1000 | | 0011 0100 | | 0111 0001 | | |
| | 0011 0000 | | 0101 0100 | | 1011 0001 | | |
| | 0101 0000 | | 1001 0100 | | 1101 0001 | | |
| | 1001 0000 | 80 | 1100 0100 | 127 | 1110 0001 | | |
| | 1010 0000 | | 0110 0100 | | .... .... | | |
| | 0110 0000 | | 1010 0100 | | .... .... | | |
| | 1100 0000 | | 1001 1000 | | .... .... | | |
| | | | 0101 1000 | 255 | 1111 1111 | | |
| 37 | 1000 0011 | | 0011 1000 | | | | |
| | 0100 0011 | | 0110 1000 | | | | |
| | 0010 0011 | | 1010 1000 | | | | |
| 40 | 0001 0011 | | 1100 1000 | | | | |
| | 0000 1011 | | 1101 0000 | | | | |
| | 0000 0111 | 90 | 0111 0000 | | | | |
| | 0000 1101 | | 1011 0000 | | | | |
| | 0001 0101 | | 1110 0000 | | | | |
| | 0010 0101 | | | | | | |

Fig. 3

Fig. 4

EP 0 103 248 B1